# EUROPEAN PATENT APPLICATION

(11) **EP 2 987 894 A1**
(43) Date of publication of application: **24.02.2016**
(21) Application number: 14785421.0
(22) Date of filing: 26.02.2014
(51) Int. Cl.: D01D 5/00, D01D 4/00, D01D 13/00

(54) **ELECTROSPINNING APPARATUS**

(30) Priority: 17.04.2013 KR 20130042242; 17.04.2013 KR 20130042243; 17.04.2013 KR 20130042245; 17.04.2013 KR 20130042246
(71) Applicant: Finetex Ene, Inc., Seoul 137-819 (KR)
(72) Inventor: PARK, Jong-Chul, Seoul 140-774 (KR)
(74) Representative: v. Bezold & Partner Patentanwälte - PartG mbB
(86) International application number: PCT/KR2014/001584
(87) International publication number: WO 2014/171625

(57) **Abstract**

The present invention relates to an electrospinning apparatus, and the purpose of the present invention is to provide an electrospinning apparatus capable of producing nanofiber having various ingredients and thicknesses by controlling the temperature of at least one solution discharged from nozzles mounted on the tubular bodies of a nozzle block and thus controlling the viscosity of the solution which is electrospun; producing nanofiber having uniform quality without applying a density difference and a voltage difference by disposing the front end portions of the nozzles in a flare shape; and mass-producing nanofiber at a low cost as well as reducing the amount of the solution used by removing an overflow prevention system and using a metering pump alone or by using the metering pump and the overflow prevention system alternatively or in a hybrid manner.

## Description

### Technical Field

The present invention relates to an electrospinning apparatus, and more particularly by controlling solution temperature from nozzle equipped on nozzle block tubular bodies, controlling electrospin solution viscosity, nanofiber with various components and thickness could be manufactured, nozzle block front-end is arranged in divergent shape, there aren't density difference and voltage difference, nanofiber with uniform quality could be produced, only using metering pump, or by alternatively using metering pump and overflow prevent system, solution usage amount is decreased, and simultaneously mass-producing nanofiber in low cost.

### Background Art

Generally, Electrospinning is technology producing micro diameter fiber by spinning fiber material solution in charging state, recently nanometer fiber(below, 'nanofiber') could be manufactured, and research regarding this is actively in progress. Nanofiber produced by electrospinning means fiber having average diameter of 5 to 1000nm, like this if fiber diameter decreases, new features appear. For example, increase in ratio of surface to volume, enhance in surface functionality, enhance in mechanical property including tension.

Here, Nanofiber is applied in many application field because it has high ration of surface to volume, and excellent flexibility regarding surface functional group.

Nanofiber is applied in many fields because of such excellent features. For example, a web comprising such nanofiber is separation membrane-type material with porosity, and applied in various field such as a variety of filter kinds, wound dressings, and artificial supporters.

Also, nanofiber has excellent filtering effect in filter usage, and nanofiber manufactured from polymer with electrical conductivity is coated on glass, perceives amount of sun light, and can make window color change.

Moreover, in the case nanofiber with conductivity is used as lithium ion battery electrolyte, electrolyte leak could be prevented, battery size and weight are largely decreased, in the case of making nanofiber with artificial protein similar to biological tissue, it is used as bandage absorbed directly in body or artificial skin.

Manufacture method of nanofiber includes drawing, template synthesis, phase separation, self assembly, and electrospinning.

Especially, among the manufacture methods, electrospinning method is widely applied as a method of consecutively mass-producing nanofiber from various polymers.

Such electrospinning method is between two electrode having oppsite polarity, one pole of electrode in spinning nozzle portion, another pole in collector, charged spinning material is discharged in air through spinning nozzle portion, subsequently draw electric charged filament in air, or through another filament, manufactures micro fiber. In other words, charged and discharged filament is through severe galloping because of electric effect such as mutual resistance in electrical-field formed between nozzle and collector, and extremely thinned.

An electrospinning apparatus which manufactures nanofiber by electrospinning comprising a storage tank storing spinning solution, a distribution pipe transferring spinning solution quantitatively, a metering pump for supplying spinning solution in required amount, a nozzle block in which a plurality of nozzles to discharge spinning solution is arranged, a collector collecting spin fiber and located oppositely to the nozzle block, and a voltage generating device for providing voltage.

Type of polymer and solvent used when producing nanofiber with such electrospinning apparatus, solvent type, polymer solution concentration, and spinning room temperature and humidity are known to affect diameter and spinning property of produced nanofiber.

Temperature and humidity regarding electrospinning area, region occurring electrospinning(below, indicated as 'spinning region'), temperature by changing spinning solution viscosity, modifies spinning solution surface tension, eventually affects spin nanofiber diameter.

In other words, in the case spinning region temperature is relatively high and solution viscosity is low, nanofiber with relatively thin fiber diameter is manufactured, and in the case temperature is relatively low and solution viscosity is high, nanofiber with relatively thick fiber diameter is manufactured.

Therefore, in order to manufacture nanofiber with constant fiber diameter distribution, spinning room temperature and humidity should be controlled to maintain constantly according to given condition, for this, there are drawbacks such as equipment expense and energy expense cost a lot.

Meanwhile, in order to overcome strength limit of electrospin nanofiber using one type of polymer solution, enhanced nanofiber is manufactured by laminating and mixing polymer solution having different component.

In the case of manufacturing such multiple layer nanofiber, there is strong point such as enhanced nanofiber is manufactured, but relatively nanofiber thickness becomes thicker, when polymer solution electrospin and integrated to a collector, as one polymer solution is used, there is problem that two or more electrospinning apparatus are needed, and there are problems such as installation expense and energy expense cost a lot, manufacture line becomes longer, and processing time is increased.

Meanwhile, when manufacturing nanofiber through the electrospinning apparatus, factors deciding nanofiber characteristics are matter feature such as density, dielectric feature, and surface tension, and control factor such as distance between a nozzle and a collector, voltage between a nozzle and a collector, charge density in electrical field, electrostatic pressure in nozzle, and spinning material injection speed.

Moreover, when producing extra fine denier fiber using the electrospinning apparatus, factors determining extra fine denier fiber feature are tip form of nozzle and nozzle pack, electric field interference according to distance among nozzle tip, electric field charge density, and electrostatic pressure in nozzle.

When manufacturing a product by electrospinning through the electrospinning apparatus, regarding a nozzle among important factors determining a product feature, by manufacturing nanofiber using one or few nozzle, production speed is very low so it is difficult to commercialize.

Therefore, in order to commercialize electrospinning, it is needed to figure out problems regarding nozzle form and problems regarding spinning nozzle through research on interference among nozzle.

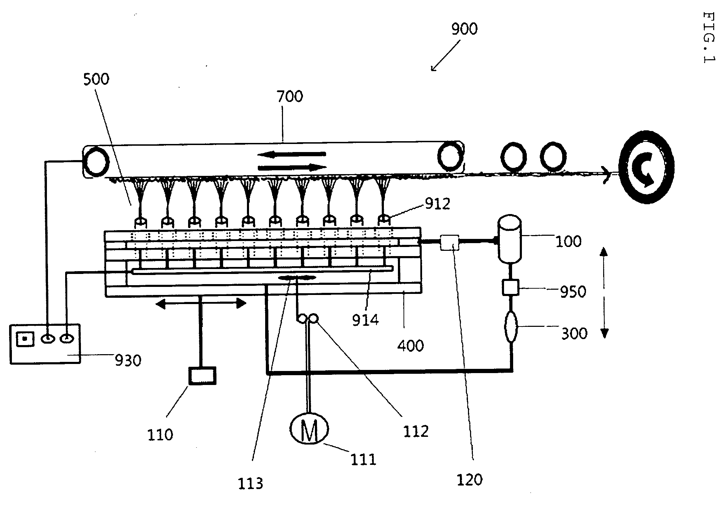

Meanwhile, nanofiber manufacture device(refer to Japanese Patent No. 4402695) which recycles collected polymer solution overflowed from a plurality of nozzle's outlet as nanofiber material is known, as illustrated in FIG. 1, the nanofiber manufacture device(900) comprises; a plurality of nozzle(912) discharging polymer solution upward from an outlet; a nozzle block(400) having polymer solution supply path(914) which supplies polymer solution to the plurality of nozzle(912); a voltage generating device(930) which applies voltage between the nozzle block(400) and a collector(700); a spinning solution main tank(100) which stores polymer solution that is material of the nanofiber; a metering pump(950) which supplies polymer solution stored in the spinning solution main tank(100) to polymer solution supply path(914) of the nozzle block (400); and a retrieval pump(120) which retrieves overflowed polymer solution from outlet of the plurality of nozzle(912)and returning overflowed polymer solution to the spinning solution main tank(100).

Though according to the nanofiber manufacture device as stated above, phenomenon of polymer solution lump which isn't spun from nozzle attached to a collector plate(below, indicated as "Droplet phenomenon") could be slightly resolved, we are in the state of requiring technology to cut down amount of polymer solution used by preventing droplet phenomenon.

### Disclosure

### Technical Problem

The present invention is contrived to solve the problems, the purpose is to provide an electrospinning apparatus capable of producing nanofiber having various ingredients and thicknesses by controlling the temperature of at least one solution discharged from nozzles mounted on the pipe of a nozzle block and thus controlling the viscosity of the solution which is electrospun; producing nanofiber having uniform quality without applying a density difference and a voltage difference by disposing the front end portions of the nozzles in a flare shape; and mass-producing nanofiber at a low cost as well as reducing the amount of the solution used by removing an overflow prevention system and using a metering pump alone or by using the metering pump and the overflow prevention system alternatively or in a hybrid manner.

### Technical Solution

In order to achieve the objects stated above, the present invention isan electrospinning apparatus manufacturing nanofiber by electrospinning method, comprising: a nozzle block in which a plurality of nozzles discharging polymer solution is arranged, a collector installed and placedseparately from the nozzle block and integrating nanofiber, a voltage generating device applying high voltage between the collector and the nozzle, an elongated sheet conveyed between the collector and the nozzle, wherein the nozzle block comprises a plurality of tubular bodies which connected to a plurality of nozzles, and a heat line or a pipe connected totemperature adjusting device inside each tubular body to control temperature of polymer solution.

Here, each tubular body is equipped on the nozzle block detachable, the heat line provided in each of tubular body is formed in coil form or linear form, and the pipe in each of tubular bodyis formed in U form.

Moreover, electrospinning method of manufacturing nanofiber by discharging polymer solution from a plurality of nozzles connected to tubular body is one among bottom-up type, top-down type, or parallel type.

Meanwhile, An electrospinning apparatus, manufacturing nanofiber by electrospinning method, comprising a nozzle block in which a plurality of nozzles discharging two or more polymer solution is arranged, a collector installed and placed separately from the nozzle block and integrating nanofiber, a voltage generating device applying high voltage between the collector and the nozzle, an elongated sheet conveyed between the collector and the nozzle, wherein the nozzle block comprises a plurality of tubular bodies, and a heat line or a pipe connected totemperature adjusting device inside each tubular body to control temperature of polymer solution, further comprising two or more polymer solution storage tanks for storing polymer solution with different component separately, and polymer solution flowing pipe for flowing polymer solution in each polymer solution storage tank.

Here,the polymer solution is one or more among polylactic acid(PLA), polypropylene(PP), polyvinyl acetate(PVAc), polyethylene terephthalate(PET), polybutylene terephthalate(PBT), polyethylene napthalate(PEN), polyamide(PA), polyurethane(PU), polyvinyl alcohol(PVA), polyetherimide(PEI), polycaprolactone(PCL), poly lactic-co-glycolic acid(PLGA), silk, cellulose, and chitosan.

In this case, each tubular body is equipped on the nozzle block detachable, the heat line provided in each of tubular body is formed in coil form or linear form, and the pipe in each of tubular bodyis formed in U form.

Also, electrospinning method of manufacturing nanofiber by discharging polymer solution from a plurality of nozzles connected to tubular body is one among bottom-up type, top-down type, or parallel type.

Meanwile, an electrospinning apparatus manufacturing nanofiber by electrospinning method, comprising:
a nozzle block, in which a plurality of nozzles discharging polymer solution is arranged, comprising a nozzle plate arranged multi-pipe-type nozzle in sheath/core form, two or more spinning solution storage plate located bottom of the nozzle plate, and a plurality of nozzles, which discharge polymer solution, connected to nozzle for overflow removal;
a collector installed and placed separately from the nozzle block and integrating nanofiber;
a voltage generating device applying high voltage between the collector and the nozzle;
an elongated sheet conveyed between the collector and the nozzle, wherein front end portion of the nozzle connected to the nozzle block is in a flare shape.

Here, the front end portion of the nozzle is in flare shape and makes 5 degrees to 30 degrees with a cylinder axis of the nozzle, the number of nozzle swith flare-shaped front end portion is 10% to 30% of the total nozzles provided in the nozzle block.

Moreover, the electrospinning method is one among bottom-up electrospinning method which a nozzle block is located a collector bottom, top-down electrospinning method which a nozzle block is located a collector top, and parallel electrospinning method which a nozzle block and a collector is located parallel or in similar angle.

Meanwhile, electrospinning apparatus manufacturing nanofiber by electrospinning method, comprising: a nozzle block in which a plurality of nozzles discharging polymer solution is arranged, a collector installed and placed separately from the nozzle block and integrating nanofiber, a voltage generating device applying high voltage between the collector and the nozzle, a spinning solution main tank storing polymer solution, and a middle tank storing polymer solution supplied from the spinning solution main tank, further comprising a metering pump for measuring discharging amount from the nozzle.

Also, an electrospinning apparatus manufacturing nanofiber by electrospinning, comprising: a nozzle block in which a plurality of nozzles discharging polymer solution is arranged, a collector installed and placed separately from the nozzle block and integrates nanofiber, a voltage generating device applying high voltage between the collector and the nozzle, a spinning solution main tank storing polymer solution, a recycling tank recycling and storing polymer solution, and a middle tank storing polymer solution supplied from the spinning solution main tank, further comprising an overflow prevention system for preventing polymer solution from overflow, and a metering pump for measuring discharging amount from the nozzle, wherein the overflow prevention system and the metering pump are used alternatively or in hybrid type.

Here, the overflow prevention system comprises a concentration correction device to correct polymer solution concentration.

### Advantageous Effects

The present invention having the composition stated above, by controlling one or more polymer solution viscosity by equipped a temperature adjusting device in each tubular body of a nozzle block, electrospinning nanofiber with various thickness and various components is discharged, thereby nanofiber with various thickness and various components could be manufactured, manufacturing process is simplified and simultaneously manufacture cost is down, nanofiber having uniform quality could be manufactured. Also by adjusting polymer solution amount, amount of polymer solution attached to a nozzle, which is not integrated to a collector, is minimized and simultaneously polymer solution consumption is minimized, and mass-producing nanofiber is possible in low cost.

### Brief Description of the Drawings

FIG. 1 illustrates a schematic diagram of nanofiber manufacture device according to the prior art,
FIG. 2 shows a drawing of an electrospinning apparatus according to the present invention,
FIG. 3 is a top plan view illustrating a polymer solution supply device of the electrospinning apparatus according to the present invention,
FIG. 4 is a front section illustrating a schematic diagram of one exemplary embodiment of tubular body of the electrospinning apparatus according to the present invention, FIG. 5 is a side section depicting A-A' line,
FIG. 6 is a front section showing a schematic diagram of another exemplary embodiment of tubular body of the electrospinning apparatus an according to the present invention,
FIG. 7 is a side section depicting B-B' line,
FIG. 8 is a front section view showing a schematic diagram of other exemplary embodiment of tubular body of the electrospinning apparatus an according to the present invention,
FIG. 9 is a side section illustrating C-C' line,
FIG. 10 is a top plan view illustrating another embodiment of polymer solution supply device of the electrospinning apparatus according to the present invention,
FIG. 11 is a schematic diagram showing a nozzle block installed double pipe nozzle of the electrospinning apparatus according to the present invention,
FIG. 12 depicts a schematic diagram of front-end of nozzle of the elctrospinning apparatus according to the present invention,
FIG. 13 is a schematic diagram of metering pump provided in the electrospinning apparatus according to the present invention,
FIG. 14 depicts a schematic diagram of overflow system and provided metering pump of the electrospinning apparatus according the present invention.

### Description of Reference Numbers of Drawings

1: electrospinning apparatus,
10: case,
11: electro spinning room,
20: collector,
30: auxiliary belt device,
31: auxiliary belt,
32, 33, 34: auxiliary belt roller,
40: polymer solution supply device,
41: nozzle block,
42: nozzle,
43: tubular body,
44, 44a, 44b: spinning solution main tank,
45: polymer solution flow pipe,
50: voltage generating device,
60: temperature adjusting control device,
61: temperature adjusting control device connector,
62a, 62b: heat line,
63: pipe,
100: spinning solution main tank,
110: nozzle block left-right reciprocating device,
111: agitator motor,
112: dielectric rod,
113: agitator,
120: retrieval pump,
152: insulator,
201, 271: agitating device,
222, 224, 226: valve,
230: middle tank,
232: partition,
234: bubble removal filter,
236 the first storage,
238: the second storage,
239: the first sensor,
253: metering pump,
256: storage tank,
270: recycling tank,
300: spinning solution drop device,
400: nozzle block,
404: nozzle for air supply,
405: nozzle plate,
407: the first spinning solution storage plate,
408: the second spinning solution storage plate,
410: temporal storage pipe for overflowed liquid,
411: air storage pipe,
412: overflow outlet,
413: air inlet,
414: nozzle support plate for air supply,
415: nozzle for overflow removal,
416: nozzle support plate for overflow removal,
420: front-end of nozzle,
500: multi-pipe-type nozzle,
501: the first pipe in multi-pipe-type nozzle,
502: the second pipe in multi-pipe-type nozzle,
700: collector,
900: electrospinning apparatus,
912: nozzle,
914: supply path,
930: voltage generating device,
950: metering pump,
a: convey direction,
W: elongated sheet.

### Detailed Description of the Preferred Embodiments

Below, specifically explains a desirable embodiment of the present invention reference to an attached drawing. Also, the present embodiment doesn't limit the present invention extent of a right, but merely suggests an example, various modifications in the extent of not leaving the technological main point is possible.

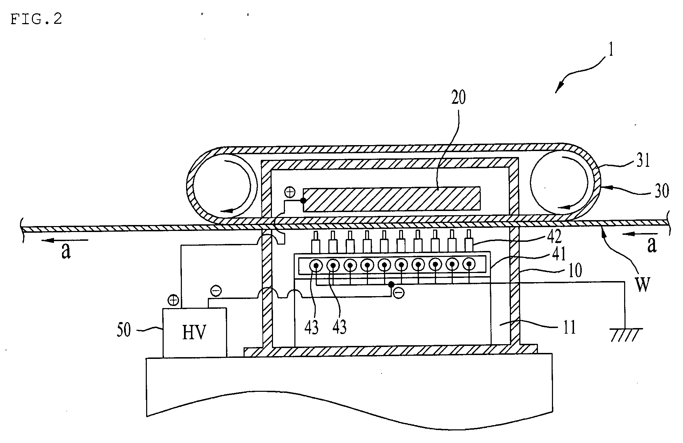

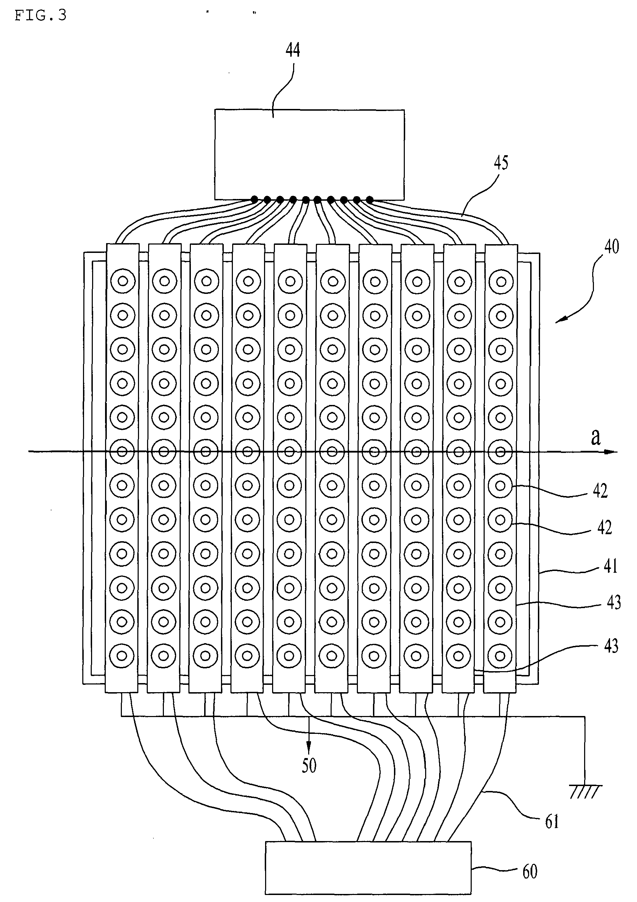

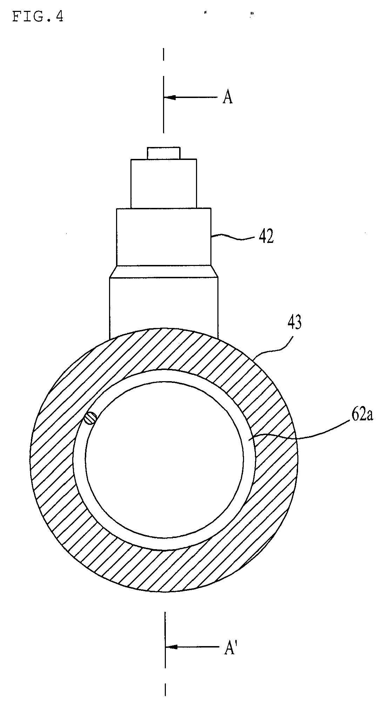

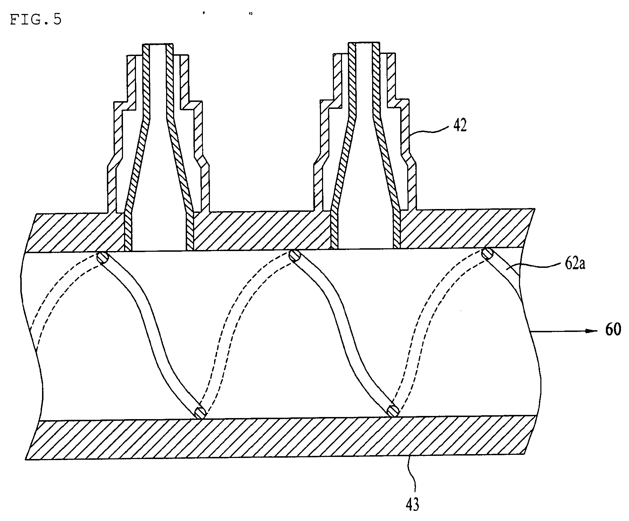

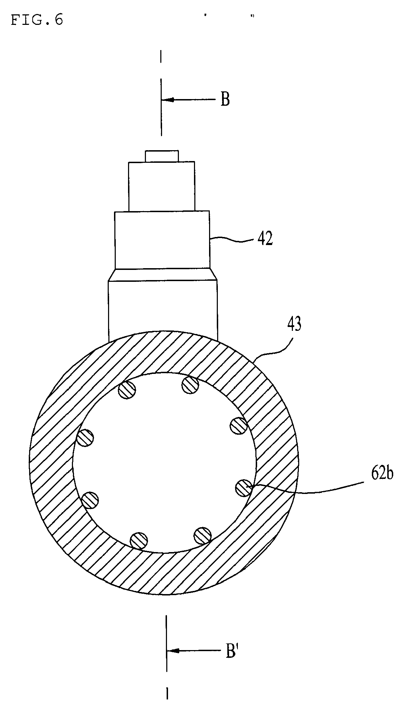

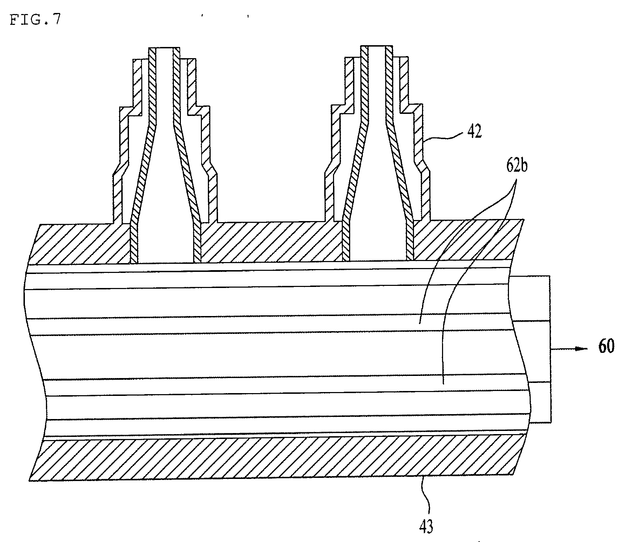

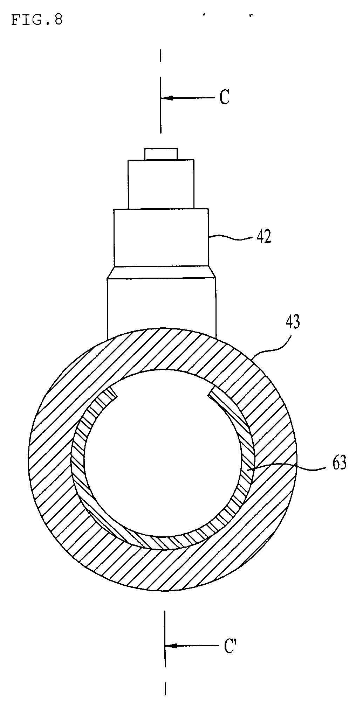

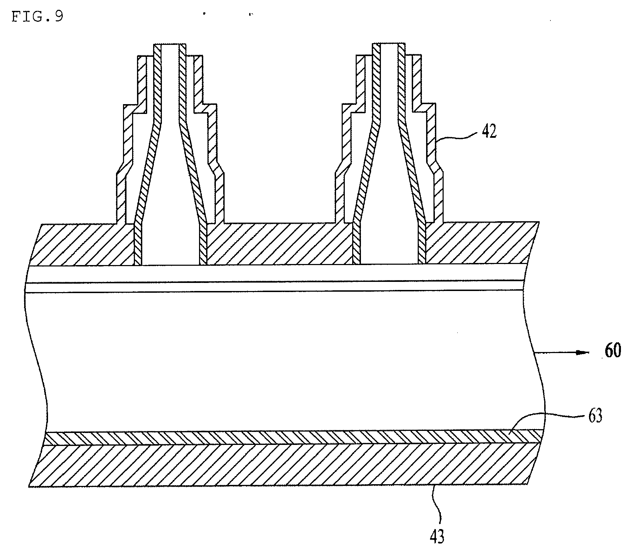

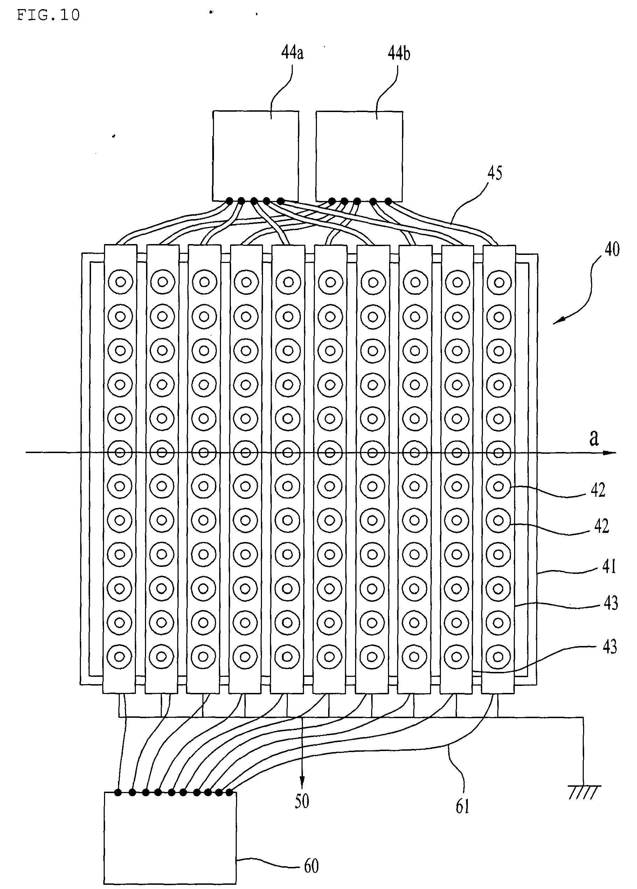

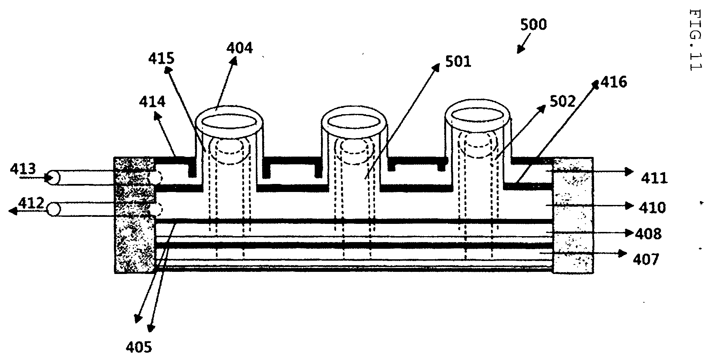

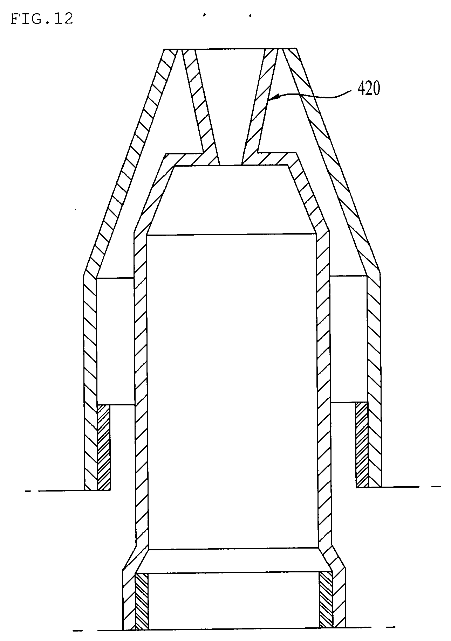

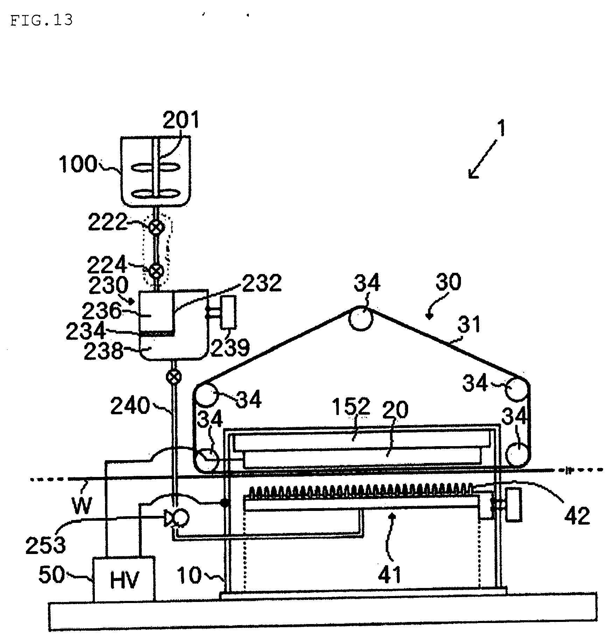

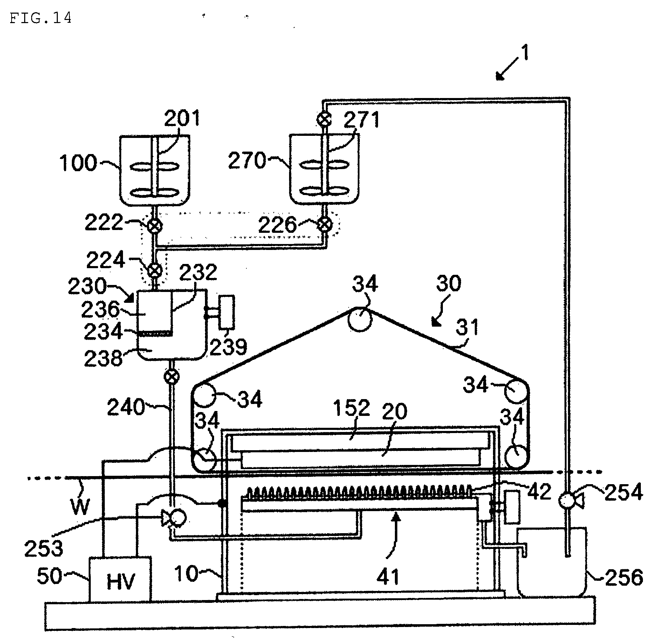

FIG. 2 shows a drawing of an electrospinning apparatus according to the present invention, FIG. 3 is a top plan view illustrating a polymer solution supply device of the electrospinning apparatus according to the present invention, FIG. 4 is a front section illustrating a schematic diagram of one exemplary embodiment of tubular body of the electrospinning apparatus according to the present invention, FIG. 5 is a side section depicting A-A' line, FIG. 6 is a front section showing a schematic diagram of another exemplary embodiment of tubular body of the electrospinning apparatus an according to the present invention, FIG. 7 is a side section depicting B-B' line, FIG. 8 is a front section view showing a schematic diagram of other exemplary embodiment of tubular body of the electrospinning apparatus an according to the present invention, FIG. 9 is a side section illustrating C-C' line, FIG. 10 is a top plan view illustrating another embodiment of polymer solution supply device of the electrospinning apparatus according to the present invention, FIG. 11 is a schematic diagram showing a nozzle block installed double pipe nozzle of the electrospinning apparatus according to the present invention, FIG. 12 depicts a schematic diagram of front-end of nozzle of the elctrospinning apparatus according to the present invention, FIG. 13 is a schematic diagram of metering pump provided in the electrospinning apparatus according to the present invention, FIG. 14 depicts a schematic diagram of overflow system and provided metering pump of the electrospinning apparatus according the present invention.

As illustrated in the drawing, the electrospinning apparatus(1) for producing nanofiber is for electrospinning on carried elongated sheet(W) following a desired direction(a) by a convey device, comprises a main control device for controlling every each operating part, VOC handling device(not shown) for removing volatility component, which is occurred when stacking nanofiber on the elongated sheet(W),by burning, and an inert gas supply device which supplies inert gas in electro spinning room(11) in the case error is detected in the electrospinning apparatus.

In the embodiment, only the electrospinning apparatus(1) is illustrated, and the convey device, the main control device, the VOC handling device and the inert gas supply device are not illustrated.

The electrospinning apparatus(1) according to the present invention is to be installed in a room adjusted temperature 20 to 40°C and humidity 20 to 60%, the electrospinning apparatus(1) comprises a case(10) with conductivity, an auxiliary belt device(30) assisting convey of the elongated sheet(W), a collector(20) located in the case(10) and upper side of the elongated sheet(W) to apply high voltage, a nozzle block(41) in which a plurality of nozzle(42) discharging polymer solution is arranged and installed directed to the collector(20), a voltage generating device(50) applying high voltage between the collector(20) and the nozzle(42), and an electrospinning room(11) having a space covering the nozzle block(41) and the collector(20).

Moreover, a polymer solution supply device(40) for supplying polymer solution in the nozzle(42) is provided.

In this case, the auxiliary belt device(30) is installed an auxiliary belt(31) covering the collector(20), the elongated sheet(W) is contacted to the outer side of the auxiliary belt(31) and conveyed by according to driving of an auxiliary belt roller (32, 33) which rotates the auxiliary belt(31), the elongated sheet(W) contacted to the auxiliary belt(31) outer side effectively conveys without driven by the collector(20) high voltage applied in both sides.

Here, the elongated sheet(W) could be made by non-woven fabric, fabric, knitting comprising various materials, or etc., and the thickness could be set from 5 to 500µm.

Meanwhile, the voltage generating device(50) applies desired voltage between the collector(20) and each of the nozzle(42), one part accesses to the collector, and the other part accesses to each tubular body(43).

Polymer solution flow of the nozzle block(41) according to the embodiment of the present invention supplies from polymer solution storage tank(44) stored polymer solution through polymer solution flow pipe(45) to each of the tubular body(43). Also, polymer solution supplied to each of the tubular body(43) is discharged through a plurality of nozzles(42), and integrated on the elongated sheet(W) in nanofiber form.

In this case, in each of the tubular body(43) a plurality of nozzle(42) along the tubular body(43) length direction, is equipped in predetermined space, material of the nozzle(42) and the tubular body(43) comprising electric conductor member, and equipped in the tubular body(43) in the state of electrically accessed.

Here, in order to control the temperature of polymer solution supplied to each of the tubular body (43) according to each tubular body(43), heat line(62a) is provided in each of the tubular body(43), the heat line(62a) is connected to a temperature adjusting control device(60) through a temperature adjusting control device connection(61).

In other words, as illustrated in FIG. 3 and 4, in each of the tubular body(43) the heat line(62a) in coil form is provided, the heat line(62a) is connected to the temperature adjusting control device(60) through the temperature adjusting cntrol device connection(61), and the temperature of polymer solution supplied in the tubular body(43) is adjusted and controlled.

A heat line(62a) in the tubular body(43) is provided in single heat line and formed in coil form, but it is possible to provide two or more heating line(62a) formed in coil form. Meanwhile, though in one embodiment of the present invention, the heat line(62a) in coil form in the tubular body(43) is provided, as illustrated in FIG. 6 and 7, in the tubular body(43) a heat line(62b) in linear form is provided, the heat liner(62b) is connected to the temperature adjusting control device(60) through the temperature adjusting control device connection(61), and the temperature of polymer solution supplied in the tubular body(43) is adjusted and controlled.

Also, as illustrated in FIG. 8 and 9, in the tubular body(43) pipe(63c) in U form is provided, the pipe(63c) connected to the temperature adjusting control device(60) through the temperature adjusting control device connection(61), and the temperature of polymer solution supplied in the tubular body(43) is adjusted and controlled.

As stated above, according to the aim of the present invention, in order to control temperature of the polymer solution in each tubular body(43), the heat line(62a, 62b) or the pipe(63) is provided in the tubular body(43), polymer solution viscosity could be controlled by adjusting temperature of polymer solution supplied in the tubular body(43) using the temperature adjusting control device(60).

Meanwhile, though in one embodiment of the present invention, one polymer solution storage tank(44) supplying the polymer solution is provided to electrospin one polymer solution, as illustrated in FIG. 10, it is also preferable that two or more polymer solution storage tank(44a, 44b) are provided, in each of the polymer solution storage tank(44a, 44b) two or more different polymer solution is each supplied, and electrospinning each of the polymer solution.

In this case, in each of the tubular body(43) of the electrospinning apparatus(1) with two or more polymer solution storage tank(44a, 44b), the heat line(62a) in coil form, the heat line(62b) in linear form, or the pipe(62c) in U form is provided, the heat line(62a, 62b) or the pipe(62c) is connected to the temperature adjusting control device(60) through the temperature adjusting control device connection(61).

The heat line(62a, 62b) or the pipe(62c) is provided in the tubular body(43), the heat line(62a, 62b) or the pipe(62c) connected to the temperature adjusting control device(60) through the temperature adjusting control device connection(61), and the temperature of polymer solution supplied in the tubular body(43) is adjusted and controlled. As stated above, according to the aim of the present invention, in order to control temperature of two or more different polymer solution in each tubular body(43), the heat line(62a, 62b) or the pipe(63) is provided in the tubular body(43), polymer solution viscosity could be controlled by adjusting temperature of polymer solution supplied in the tubular body(43) using the temperature adjusting control device(60).

Meanwhile, explaining the electrospinning apparatus according to the related art, reference to FIG. 1, the nozzle (912) is provided to discharge polymer solution in upward direction from an outlet, polymer solution is supplied from the nozzle block(400) to the nozzle(912) through the polymer solution supply path(914), metering pump(950) which supply polymer solution stored in the spinning solution main tank(100) to polymer solution supply path(914) of the nozzle block(400), and the retrieval pump(12) which retrieves overflowed polymer solution from outlet of the nozzle(912) and return polymer solution to the spinning solution main tank(100). The nozzle(912) exit provided in the nozzle block(400) comprises upward nozzle forming in upper direction, the collector(700) is located in the nozzle block(400) upper side, and spinning solution comprising polymer solution electrospins in upward direction.

Here, the nozzle(912) installed in the nozzle block(400) of the electrospinning apparatus(900), as illustrated in FIG. 11, comprising a multi-pipe-type nozzle(500), the multi-pipe-type nozzle(500) is formed in two or more pipes for simultaneously electrospinning two or more different polymer spinning solution, the first pipe(501) located in inner side and the second pipe(502) located outer side of the first pipe are combined in sheath/core form.

For this, in the nozzle block(400), a nozzle plate(405) in which a multi-pipe-type nozzle(500), that pipes are combined in sheath/core form, is arranged, the first spinning solution storage pipe(407) and the second spinning solution storage pipe(408) located in the bottom of the nozzle plate(405) and which are formed in two or more for providing spinning solution to the multi-pipe-type nozzle(500), an nozzle for overflow removal(415) forming in form of covering the multi-pipe-type nozzle(500), connected to the nozzle for overflow removal(415), a temporal storage pipe for overflow liquid(410) is located uppermost side of the nozzle plate(405), an nozzle support plate for overflow removal(416) located uppermost side of the temporal storage pipe for overflow liquid(410) and supports the nozzle for overflow removal(415), an nozzle for air supply(404) covering the multi-pipe-type nozzle(500) and the nozzle for overflow removal(415), an air storage pipe(411) supplying air to the nozzle for air supply(404), and a nozzle support plate for air supply(414) which supports the nozzle for air supply (404) and located in the uppermost-end of the nozzle block(400), and air inlet(413) which is located in the lowermost-end of the nozzle support plate for air supply(414) and supplies and stores air to nozzle for overflow removal(415), and an overflow outlet(412) which discharges overflow liquid stored in the temporal storage pipe for overflow liquid(410).

By the nozzle for overflow removal(415) provided in the electrospinning apparatus(900) in order, around the multi-pipe-type nozzle(500), spinning solution which didn't spin is removed, and by the nozzle for air supply(404), to enlarge integrated distribution of nanofiber, air is supplied.

Here, the temporal storage pipe for overflow liquid(410) is produced as insulator, and after temporally storing remained spinning solution flowed in through the nozzle for overflow removal(415), conveys it to a spinning solution supply pipe(not drawn).

Also, by the air storage pipe(411) located upper side of the temporal storage pipe for overflow liquid(410), air is supplied to the nozzle for air supply(404) covering the multi-pipe-type nozzle(500) and the nozzle for overflow removal(415). Meanwhile, the nozzle support plate for air supply(414) provided in the uppermost side of the nozzle block(400) arranged the nozzle for air supply(404) is formed in nonconductive material, the nozzle support plate for air supply(414) is located in the nozzle block(400), electric power affecting between the collector(700) and the multi-pipe-type nozzle(500) is focused only on the multi-pipe-type nozzle(500), so electrospinning is smoothly in progress only in the multi-pipe-type nozzle(500) part.

In this case, the distance from the upper tip of the multi-pipe-type nozzle (500) to the upper tip of the nozzle for air supply(404) is 1-20mm; and favorably 2-15mm. In other words, the nozzle for air supply(404) height is 1-20mm and favorably 2-15mm higher than the multi-pipe-type nozzle(500). In the case of distance between upper tip of the multi-pipe-type nozzle(500) and upper tip of the nozzle for air supply(404) is less than 1mm, in other words, when the multi-pipe-type nozzle(500) and the nozzle for air supply(404) are located in almost same level, the multi-pipe-type nozzle(500) part doesn't effectively form jet stream, the area of nanofiber attached to the collector(700) becomes smaller, in the case of distance between upper tip of the multi-pipe-type nozzle(500) and upper tip of the nozzle for air supply (404) is more than 20mm, not only nanofiber formation of the electrospinning apparatus debases as electric force weaken by high voltage flowing between the collector(900) and the multi-pipe-type nozzle(500), but also jet stream length and formed pattern become unstable. Specifically, it disturbs stability in jet stream formed part from taylor cone, smooth nanofiber spinning becomes difficult.

Meanwhile, when producing nanofiber non-woven fabric, air jetting speed jetted from the nozzle for air supply(404) is 0.05m-50m/s, and more preferably 1-30m/s. In other words, in the case air jetting speed jetted from the nozzle for air supply(404) is less than 0.05m/s, spread of nanofiber collected on the collector(700) is low and collecting area isn't largely enhanced, in the case air jetting speed jetted from the nozzle for air supply(404) is more than 50m/s, air jetting speed is too fast that area of nanofiber focused on the collector(700) decreases, more seriously not as nanofiber but in thick form attached to the collector(700), so nanofiber formation and nanofiber fabric-woven formation remarkably fall. Here, an electric conductor plate(not shown),in which pins the pins are arranged the same as the multi-pipe-type nozzle(500) arrangement, is installed in the nozzle plate(405) direct rear-end, the electric conductor plate is connected to the voltage generating device(930) as illustrated in FIG. 1. Moreover, a heating device(not shown) with indirect heating method is installed in direct rear-end of the spinning solution supply pipe(not shown).

The electric conductor plate(not shown) carries out a role of applying high voltage to the multi-pipe-type nozzle(500), the spinning solution supply pipe stores spinning solution flowing from the spinning solution drop device to the nozzle block(400), and carries out a role of supplying to the multi-pipe-type nozzle(500). In this case, the spinning solution supply pipe is preferably manufactured in minimized space to minimize spinning solution storage amount.

In this case, from the rear-end of gas flowing pipe(not shown), gas is flowed, the part of where gas first flows in is connected to a filter(not shown). The spinning solution drop device(300) rear-end formed spinning solution outlet(not drawn) inducing dropped spinning solution to the nozzle block(400). The spinning solution drop device(300) middle part is formed in hollow state for spinning solution drop in a spinning solution delivery table(not drawn) lowermost part. Spinning solution flowed in the spinning solution drop device(300) slide down following the spinning solution delivery table, and in the lowermost part, spinning solution drop, and spinning solution flow is blocked one or more times. Here, specifically looking into principle of spinning solution drop, when gas flows in the sealed spinning solution drop device(300) upper side following filter and gas intake pipe, the pressure of the spinning solution delivery table naturally becomes irregular by swirl gas, pressure difference occurs in this case, so spinning solution drops.

For flowed gas in the present invention, air or inert gas such as nitrogen could be used.

The nozzle block(400) of the present invention, in order to even electrospin nanofiber distribution, by the nozzle block left-right reciprocating device(110), in progress direction and orthogonal direction of electrospin nanofiber, does left-right reciprocating movement.

Meanwhile, in the case of producing filament, electrospinning in the state of not doing left-right reciprocating the nozzle block(400) being fixed, after producing nanofiber web with a certain width, bridging and elongating it and filament is produced.

Also, inside the nozzle block(400), more particularly inside the spinning solution supply plate(not shown), to prevent spinning solution gelation in the nozzle, an agitator(113) agitating spinning solution stored in the nozzle block(400).

The agitator(113) is connected to an agitator motor(111) by a nonconductive dielectric rod(112).

In the case of installing the agitator (113) in the nozzle block(400), when electrospinning solution including inorganic metal, or electrospinning spinning solution dissolved using mixed solvent for a long time, spinning solution gelation in the nozzle block(400) could be effectively prevented.

Also, uppermost side of the nozzle block(400) is connected to a retrieval pump(120) conveying in force excessively supplied spinning solution in the nozzle block(400) to a spinning solution main tank(100).

The retrieval pump(120) carries in force excessively supplied spinning solution in the nozzle block to the spinning solution main tank(100) by influx air.

Moreover, the heating device(not shown) in direct heating method or indirect heating method is installed in the collector(700) of the present invention, and the collector(700) is fixed or successively rotates.

Meanwhile, front-end of nozzle (420) of the multi-pipe-type nozzle(500) provided in the nozzle block(400) of the electrospinning apparatus(900)is preferably in cylinder shape and in flare shape 5 to 30 angle with a cylinder axis.

Also the flare-shaped front-end of nozzle(42) of the multi-pipe-type nozzle (500) has a form narrowing from upper side to lower side, simply it is flare shape but wedge shape is possible. Front-end(420) of the multi-pipe-type nozzle(500) forming in flare shape is preferably accounting 10 to 30% of the nozzle block(400), but it is not limited to this.

Here, inner side of the nozzle front-end(420) is provided air inlet(not shown).

Meanwhile, according to the electrospinning apparatus(1) of the present invention, the nozzle front-end(420) of some part of the nozzle block(400) is in flare shape, without arrangement density difference and voltage difference, mass-producing nanofiber with uniform quality, and web comprising such nanofiber is separation material having porosity, applied in various fields such as various filter kinds, wound dressings, artificial supporters.

Below, through the embodiment, more specifically explains for a person who has an average knowledge in the technical field of the present invention could easily repeatedly carry out. However, scope of a right of the present invention is not limited to the embodiment, including equivalent technical idea modification.

### Embodiment 1

According to a nanofiber manufacture device which features 20% of front-end of nozzle of nozzle block in flare shape, distance between electrode and nozzle is 40cm, applied voltage is 20kV, spinning solution flow is 0.1mL/h, temperature is 22°C, humidity is 20% and produces nanofiber nonwoven by electrospinning.

In this case, as there is no interference among nozzles, nanofiber non-fabric collected in predetermined discharging amount on a collector could be produced.

Meanwhile, the electrospinning apparatus(1) of the present invention, as illustrated in FIG. 13 and 14, provided a metering pump, or provided a metering pump and overflow system, controlling polymer solution amount, not integrated to the collector, minimize amount attached to the nozzle, simultaneously minimize polymer solution consumption.

In other words, as illustrated in FIG. 13, the collector(20) of the electrospinning apparatus(1) comprising an electric conductor, through an insulator(152), attached to a case(10), and located upper than a nozzle block(41).

In this case, the electrospinning apparatus(1) overflows polymer solution from an outlet(not shown) of a plurality of upward nozzle(42), discharging polymer solution from the outlet of a plurality of upward nozzle, and electrospinning nanofiber.

Also, in the embodiment, a voltage generating device(50) of the electrospinning apparatus(1) applies high voltage between a plurality of upward nozzle(42) and the collector(20).

Plus terminal of the voltage generating device(50) accesses to the collector(20), minus terminal of voltage generating device(50) accesses to the nozzle block through the case(10), an auxiliary belt device(30) has an auxiliary belt(31) synchronizes in the elongated sheet(W) carrying speed, and an auxiliary belt roller(34) assisting rotation of the auxiliary belt(31).

Here, the five auxiliary belt roller(34)s are provided, among the auxiliary belt roller (34), one or two or more auxiliary belt roller(34) is driving roller, the other auxiliary belt roller(34) is driven roller. Since the auxiliary belt(31) is arranged between the collector(20) and the elongated sheet(W), the elongated sheet(W) doesn't be drawn by the collector(20) applied high voltage and smoothly conveys.

Meanwhile, a spinning solution main tank(100) stores polymer solution which is nanofiber material, in the spinning solution main tank(100) and a recycling tank(270) having an agitator(201, 271) for preventing polymer solution separation and coagulation, a valve(22) controls carrying polymer solution from the spinning solution main tank(100), the valve(226) controls polymer solution carry from the recycling tank(270).

Here, a middle tank(230) stores polymer solution supplied from the spinning solution main tank(100) or the recycling tank(270), the middle tank(230) has a partition(232), a bubble removal filter(234), and the first sensor(239), the partition(232) covers supplied part supplying polymer solution. Meanwhile, the middle tank(230) comprises the first storage(236) which stores polymer solution before removing bubble by a bubble removal filter(234), and the second storage(238) which stores polymer solution after removing bubble by the bubble removal filter(234).

Also, a supply device(240) including one pipe, and supplies polymer solution stored in the second storage(238) of the middle tank(230)to polymer solution supply path.

Here, a metering pump(253) provided in the elctrospinning apparatus(1) is located in a supply device(240) which is between the middle tank(230) and the nozzle block(41), by minutely adjusting polymer solution which is attached to the nozzle(42) not integrated to the collector(20), and minimizes polymer solution consumption.

Meanwhile, in the electrospinning apparatus(1) the metering pump(253) and overflow system are provided, by adjusting polymer solution amount, minimizes the amount of polymer solution attached to the nozzle (42) and not integrated to the collector(20), and simultaneously minimizes polymer solution consumption. In other words, as illustrated in FIG. 14, the valve(224) of the elctrospinning apparatus(1) controls polymer solution flowing from the spinning solution main tank(100) and the recycling tank(270) to the middle tank(230), control by the valve(224) is conducted according to solution level measured by the first sensor(239).

Also, the middle tank(23) stores polymer solution supplied from the spinning solution main tank(100) or the recycling tank(270), the middle tank(230) is arranged rear-end of the middle tank(230)is located upper than front-end of the upward nozzle(42).

In addition, a pump(254) generates electric power to carry polymer solution to the recycling tank(270) which is located upper than the nozzle block(41) nearby.

Polymer solution of the embodiment of the elctrospinning apparatus(1), as illustrated in FIG. 13, adjusted by the metering pump(253), in the case of droplet phenomenon doesn't occur, an overflow prevention system isn't operated, and in the case of droplet phenomenon occurs, the overflow system operates in hybrid type.

Here, polymer solution, not electrospinned in the collector(20) and attached to the nozzle(42), is stored in a storage tank(256) and filled in the recycling tank(270), in the recycling tank(270) solution density correction device is additionally provided, and polymer solution is directly supplied to the middle tank(230) and reused.

Meanwhile, a metering pump(253) is used alternatively or in hybrid type with the overflow prevention system discharging polymer solution from the nozzle(42) outlet, and added device for correction of solution concentration.

In this case, as device correcting the polymer solution concentration, a viscosity sensor installed in the recycling tank(270) and measuring viscosity of stored solution and device providing solvent to the recycling tank(270) by contrasting value and predetermined value.

While the present invention is described with reference to particular embodiments thereof, it will be understood by those skilled in the art that variations or amendment may be made therein without departing from the sprit and scope of the invention. The scope of the present invention is not limited by those variations or amendments, but by the following claims.

## Claims

1. An electrospinning apparatus manufacturing nanofiber by electrospinning method, comprising:
a nozzle block in which a plurality of nozzles discharging polymer solution is arranged, a collector installed and placedseparately from the nozzle block and integrating nanofiber, a voltage generating device applying high voltage between the collector and the nozzle, an elongated sheet conveyed between the collector and the nozzle,
wherein the nozzle block comprises a plurality of tubular bodies which connected to a plurality of nozzles, and a heat line or a pipe connected to temperature adjusting device inside each tubular body to control temperature of polymer solution.

2. The electrospinning apparatus of claim 1, wherein each tubular body is equipped on the nozzle block detachable, the heat line provided in each of tubular body is formed in coil form or linear form, and the pipe in each of tubular body is formed in U form.

3. The electrospinning apparatus of claim 1 or claim 2, wherein electrospinning method of manufacturing nanofiber by discharging polymer solution from a plurality of nozzles connected to tubular body is one among bottom-up type, top-down type, or parallel type.

4. An electrospinning apparatus manufacturing nanofiber by electrospinning method, comprising:
a nozzle block in which a plurality of nozzles discharging two or more polymer solution is arranged, a collector installed and placed separately from the nozzle block and integrating nanofiber, a voltage generating device applying high voltage between the collector and the nozzle, an elongated sheet conveyed between the collector and the nozzle,
wherein the nozzle block comprises a plurality of tubular bodies, and a heat line or a pipe connected to temperature adjusting device inside each tubular body to control temperature of polymer solution,
further comprising two or more polymer solution storage tanks for storing polymer solution with different component separately, and polymer solution flowing pipe for flowing polymer solution in each polymer solution storage tank.

5. The electrospinning apparatus of claim 4, wherein the polymer solution is one or more selected from group consisting of polylactic acid(PLA), polypropylene(PP), polyvinyl acetate(PVAc), polyethylene terephthalate(PET), polybutylene terephthalate(PBT), polyethylene napthalate(PEN), polyamide(PA), polyurethane(PU), polyvinyl alcohol(PVA), polyetherimide(PEI), polycaprolactone(PCL), poly lactic-co-glycolic acid(PLGA), silk, cellulose, and chitosan.

6. The electrospinning apparatus of claim 4, wherein each tubular body is equipped on the nozzle block detachable, the heat line provided in each of tubular body is formed in coil form or linear form, and the pipe in each of tubular bodyis formed in U form.

7. The electrospinning apparatus of any one of claim 4 to claim 6, wherein electrospinning method of manufacturing nanofiber by discharging polymer solution from a plurality of nozzles connected to tubular body is one among bottom-up type, top-down type, or parallel type.

8. An electrospinning apparatus manufacturing nanofiber by electrospinning method, comprising:
a nozzle block,in which a plurality of nozzles discharging polymer solution is arranged, comprising a nozzle plate arranged multi-pipe-type nozzle in sheath/core form, two or more spinning solution storage plate located bottom of the nozzle plate, and a plurality of nozzles, which discharge polymer solution, connected to nozzle for overflow removal;
a collector installed and placed separately from the nozzle block and integrating nanofiber; a voltage generating device applying high voltage between the collector and the nozzle; an elongated sheet conveyed between the collector and the nozzle;
wherein front end portion of the nozzle connected to the nozzle block is in a flare shape.

9. The electrospinning apparatus of claim 8, wherein the front end portion of the nozzle is in flare shape and makes 5 degrees to 30 degrees with a cylinder axis of the nozzle, the number of nozzle swith flare-shaped front end portion is 10% to 30% of the total nozzles provided in the nozzle block.

10. The electrospinning apparatus of claim 8, wherein the electrospinning method is one among bottom-up electrospinning method which a nozzle block is located a collector bottom, top-down electrospinning method which a nozzle block is located a collector top, and parallel electrospinning method which a nozzle block and a collector is located parallel or in similar angle.

11. An electrospinning apparatus manufacturing nanofiber by electrospinning method, comprising:
a nozzle block in which a plurality of nozzles discharging polymer solution is arranged, a collector installed and placed separately from the nozzle block and integrating nanofiber, a voltage generating device applying high voltage between the collector and the nozzle, a spinning solution main tank storing polymer solution, and a middle tank storing polymer solution supplied from the spinning solution main tank,
further comprising a metering pump for measuring discharging amount from the nozzle.

12. An electrospinning apparatus manufacturing nanofiber by electrospinning, comprising:
a nozzle block in which a plurality of nozzles discharging polymer solution is arranged, a collector installed and placed separately from the nozzle block and integrates nanofiber, a voltage generating device applying high voltage between the collector and the nozzle, a spinning solution main tank storing polymer solution, a recycling tank recycling and storing polymer solution, and a middle tank storing polymer solution supplied from the spinning solution main tank,
further comprising an overflow prevention system for preventing polymer solution from overflow, and a metering pump for measuring discharging amount from the nozzle, wherein the overflow prevention system and the metering pump are used alternatively or in hybrid type.

13. The electrospinning apparatus of claim 12, wherein the overflow prevention system comprising a concentration correction device to correct polymer solution concentration.
